# EUROPÄISCHE PATENTSCHRIFT

(11) **EP 2 603 693 B1**
(45) Veröffentlichungstag und Bekanntmachung des Hinweises auf die Patenterteilung: **13.04.2016**
(21) Anmeldenummer: 11728804.3
(22) Anmeldetag: 20.06.2011
(51) Int. Cl.: F03D 80/00

(54) **ARBEITSBÜHNE UND LIFT FÜR WINDTURBINE**
WORKING PLATFORM AND LIFT FOR WIND TURBINE
PLATE-FORME DE TRAVAIL ET ASCENSEUR POUR ÉOLIENNE

(30) Priorität: 13.08.2010 DE 202010011397 U
(43) Veröffentlichungstag der Anmeldung: 19.06.2013
(73) Patentinhaber: Wobben Properties GmbH, 26607 Aurich (DE)
(72) Erfinder: MÜLLER, Johann, 26607 Aurich (DE)
(74) Vertreter: Eisenführ Speiser
(86) Internationale Anmeldenummer: PCT/EP2011/060219
(87) Internationale Veröffentlichungsnummer: WO 2012/019815

(56) Entgegenhaltungen:
- EP-A2- 0 739 851
- EP-A2- 2 093 417
- WO-A1-03/002447
- WO-A1-2006/056196
- FR-A1- 2 821 613
- GB-A- 1 287 619
- US-A- 5 069 324

## Beschreibung

Die vorliegende Erfindung betrifft eine Windenergieanlagen-Arbeitsbühne nach dem Oberbegriff von Anspruch 1, mit einer Arbeitsplattform und einem auf der Arbeitsplattform angeordneten Geländer, wobei das Geländer mittels eines Absperrelements absperrbar ist und das Absperrelement in einem Übergangsbereich zu einem Lift angeordnet ist.

Die Erfindung betrifft weiter eine Windenergieanlage mit mindestens einer vorstehend genannten Windenergieanlagen-Arbeitsbühne, einen Lift sowie eine Verriegelungsvorrichtung für eine Windenergie-Anlage.

Arbeitsbühnen der vorstehend genannten Art kommen während der Montage von Windenergieanlagen oder zu Service-Arbeiten während der Lebensdauer von Windenergieanlagen zum Einsatz. Bestimmte Typen von Windenergieanlagen erfordern lediglich das temporäre Vorhandensein von Arbeitsbühnen an oder in einer Windenergieanlage, insbesondere während des Auf- oder Abbaus, während bei anderen Anlagentypen, insbesondere großen Windenergieanlagen, häufig eine oder mehrere Arbeitsbühnen fest installiert sind. Arbeitsbühnen der vorstehend genannten Art können auch in der Kanzel einer Windenergieanlage angeordnet sein. Die Arbeitsbühnen bestimmter Windenergieanlagen werden mittels eines Lifts angefahren. Der Zutritt vom Lift zur Arbeitsbühne der Anlage erfolgt in einem Übergangsbereich auf der Arbeitsbühne. Müssen auf mehreren Bühnen parallel Arbeiten durchgeführt werden oder wird der Lift zum Fahren der Kanzel oder zur Rückkehr zum Boden benötigt, kommt es im Betrieb vor, dass arbeitendes Personal auf den Arbeitsbühnen verbleibt, wenn der Fahrstuhl nicht an der Plattform verweilt. Aus Sicherheitsgründen ist es zwingend erforderlich, den Übergangsbereich der Arbeitsbühnen mittels eines Absperrelements abzusperren, damit die Gefahr von Sturz-Unfällen möglichst umfassend reduziert werden kann.

Bekannte Vorrichtungen sehen zu diesem Zweck Verriegelungsvorrichtungen an den Geländern von Arbeitsplattformen vor, mittels derer die Absperrelemente an dem Geländer verriegelt werden können. Allerdings ist es bei den bekannten Vorrichtungen möglich, dass auf Grund von Fahrlässigkeiten oder gar vorsätzlich das Absperrelement unverriegelt zurückgelassen wird, wenn der Lift die Arbeitsbühne verlässt. Dies wird als Nachteil im Stand der Technik angesehen und zugleich als schwerwiegende Sicherheitslücke empfunden.

Das Dokument FR 2821613 A1 zeigt eine Aufzugskabine mit einem an einer Kette befestigten Schlüssel, mit welchem eine Galerietür verriegelt und entriegelt werden kann, wobei die Kette innerhalb des Aufzugs angeordnet ist. Die Länge der Kette ist so bemessen, dass man die Galerie nicht entriegeln kann, solange der Aufzug nicht auf der korrekten Höhe platziert ist.

Dokument WO 2006/056196 zeigt eine Windenergieanlage mit einem Fundament und einem auf dem Fundament positionierten Turm, wobei der Turm einen Lift aufweist, mit welchem es möglich ist, zwischen einem Bodenniveau und einem Arbeitsbühnenniveau hin- und herzufahren.

Dokument US 5,069,324 offenbart ein Kettenschloss für Einkaufswagen mit einem vorderen und einem hinteren Schlüsselloch, welche jeweils zur Aufnahme eines Schlüssels ausgebildet sind, wobei mit einem Schlüssel in einem Verriegelungsmechanismus jeweils der andere Schlüssel freigegeben wird.

Hiervon ausgehend lag der vorliegenden Erfindung die Aufgabe zugrunde, eine Windenergieanlagen-Arbeitsbühne, eine hierfür ausgebildete Verriegelungsvorrichtung, einen Lift und eine Windenergieanlage anzugeben, die jeweils eine verbesserte Sicherheit gegen Sturz-Unfälle vorsehen.

Die vorliegende Erfindung löst die ihr zu Grunde liegende Aufgabe bei einer Windenergieanlagen-Arbeitsbühne der eingangs genannten Art, indem diese nach Anspruch 1 ausgebildet ist, mit einer Verriegelungsvorrichtung mit einem Verriegelungsmechanismus zur Aufnahme eines ersten Verriegelungselements und eines zweiten Verriegelungselements, wobei das erste Verriegelungselement mit dem Lift verbunden ist und das zweite Verriegelungselement mit dem Absperrelement verbunden ist, und der Verriegelungsmechanismus zur Freigabe eines der beiden Verriegelungselemente mittels der Verriegelung des jeweils anderen Verriegelungselements relativ zu der Verriegelungsvorrichtung ausgebildet ist.

Der Verriegelungsmechanismus ist nach Art eines Pfandschließsystems ausgebildet. Der Vorteil in der Verwendung eines Pfandschließsystems ist insbesondere darin zu sehen, dass solche Systeme kommerziell erhältlich sind und auch bei älteren, bereits installierten Arbeitsbühnen mit geringstem Aufwand nachrüstbar sind.

Der Erfindung liegt die Erkenntnis zu Grunde, dass die Sicherheit gegen einen unbeabsichtigten Sturz durch den Übergangsbereich des Geländers der Arbeitsbühne dadurch am wirkungsvollsten verbessert wird, dass ein Entfernen des Lifts von der Arbeitsbühne ohne vorheriges Sichern des Übergangsbereichs durch Verriegeln des Absperrelements relativ zu der Arbeitsbühne unmöglich gemacht wird. Dies wird erfindungsgemäß dadurch umgesetzt, dass zum Entriegeln der Verriegelungsvorrichtung der Arbeitsbühne das erste Verriegelungselement in eine Verriegelungsstellung relativ zu dem Verriegelungsmechanismus der Verriegelungsvorrichtung gebracht werden muss. Dadurch, dass das erste Verriegelungselement aber auch mit dem Lift verbunden ist, insbesondere mechanisch fest verbunden ist, befindet sich zusätzlich zu dem ersten Verriegelungselement auch der Lift in einer Verriegelungsstellung, wenn das zweite Verriegelungselement, welches dem Absperrelement auf der Arbeitsbühne zugeordnet ist, sich in einer Freigabestellung befindet. Erfindungsgemäß kann die Verriegelungsstellung des ersten Verriegelungselements ausschließlich dadurch aufgehoben werden, dass das zweite Verriegelungselement in eine Verriegelungsstellung relativ zu der Verriegelungsvorrichtung gebracht wird. Der Verriegelungsmechanismus der Verriegelungsvorrichtung ist folglich dazu ausgebildet, immer entweder das erste Verriegelungselement oder das zweite Verriegelungselement in einer Verriegelungsstellung zu halten, so dass sich zwei sicherheitsrelevante Zustände wechselweise ergeben. Dies sind einerseits eine Verriegelung des Absperrelements an der Arbeitsbühne bei Abwesenheit des Lifts und zweitens eine Anwesenheit des Lifts an der Arbeitsbühne in Freigabestellung des Absperrelements. Ein Entfernen des ersten Verriegelungselements und somit ein Lösen des Lifts von der Arbeitsbühne ist bei nicht verriegeltem Absperrelement auf der Arbeitsbühne nicht möglich.

Vorzugsweise weist der Verriegelungsmechanismus Sperrmittel zum wechselweisen Formschluss und/oder Kraftschluss mit dem ersten und zweiten Verriegelungselement auf. Die Sperrmittel weisen bevorzugt mindestens einen Sperrkörper zum Formschluss und/oder Kraftschluss mit dem ersten oder zweiten Verriegelungselement auf, welcher mittels eines dem jeweils anderen Verriegelungselement zugeordneten Verdrängungskörpers außer Eingriff mit dem ersten oder zweiten Verriegelungselement bringbar ist.

Die Erfindung wird dadurch vorteilhaft weitergebildet, dass der Verriegelungsmechanismus zur Aufnahme des ersten Verriegelungselements in Form einer Münze, eines profilierten und/oder konturierten Flachkörpers, Stabes oder Hohlkörpers eingerichtet ist. Das erste Verriegelungselement ist vorzugsweise so ausgebildet, dass nur dieses mit dem Verriegelungsmechanismus in Eingriff gebracht werden kann. Somit ist ausgeschlossen, dass von einem Bediener ein alternativer, handelsüblicher Gegenstand in den Verriegelungsmechanismus eingeführt wird, welcher nicht fest mit dem Lift verbunden ist. Dies wird im Fall einer Münze als Verriegelungselement vorzugsweise dadurch erreicht, dass die Münze einer Fremdwährung zugeordnet ist. Möglichkeiten der Umgehung der sicherheitskonformen und bestimmungsgemäßen Nutzung werden auf diese Weise eingeschränkt.

Vorzugsweise ist das zweite Verriegelungselement analog als eine Münze, ein profilierter und/oder konturierter Flachkörper, Stab oder Hohlkörper ausgebildet.

Unter einem Pfandschließsystem wird beispielsweise ein Schließsystem für Einkaufswagen oder Gepäckaufbewahrungs-Einrichtungen verstanden.

Der Verriegelungsmechanismus ist vorzugweise innerhalb eines Gehäuses der Verriegelungsvorrichtung angeordnet. Durch das Gehäuse wird Schutz gegen Beschädigung und/oder missbräuchliches Öffnen des Verriegelungsmechanismus in bestimmungsfremder Weise gewährleistet. Weiterhin wird Schutz gegen Eindringen von Verschmutzungen vorgesehen.

In einer bevorzugten Ausführungsform der Arbeitsbühne ist der Verriegelungsmechanismus in der Verriegelungsvorrichtung ortsfest an der Arbeitsbühne, vorzugsweise dem Geländer, angeordnet. Eine Anordnung des Verriegelungsmechanismus in für einen Bediener angenehmer Höhe, vorzugsweise etwa auf Hüfthöhe, vereinfacht die Bedienung.

Gemäß einer weiteren vorteilhaften Ausführungsform der erfindungsgemäßen Arbeitsbühne ist das Absperrelement in einem ersten Abschnitt des Übergangsbereichs zu dem Lift schwenkbar mit dem Geländer verbunden, und der Verriegelungsmechanismus ist in einem dem ersten Abschnitt gegenüberliegenden zweiten Abschnitt des Übergangsbereichs zu dem Lift angeordnet. Das Absperrelement ist vorzugsweise eine Stange, Kette oder eine Tür. Die Auswahl des Absperrelements richtet sich vorzugsweise nach der Größe der Arbeitsbühne. Alternativ zu einer schwenkbaren Anordnung des Absperrelements sind auch parallel verschiebbare Anordnungen bevorzugt anzuwenden, insbesondere, wenn der Platzbedarf eine Schwenkbewegung nicht zulässt.

Der Lift ist vorzugsweise zum Befahren einer Bodenebene und der mindestens einen Arbeitsbühne ausgebildet und weist einen Zugangsabschnitt sowie ein mit dem Lift verbundenes erstes Verriegelungselement auf.

Das erste Verriegelungselement zur Betätigung einer Verriegelungsvorrichtung gemäß einer bevorzugten Ausführungsform der vorliegenden Erfindung ausgebildet ist, wobei das erste Verriegelungselement mittels eines ersten Verbindungsglieds, vorzugsweise einer Kette, eines Drahts, Drahtgeflechts oder Seils, in einem ersten Abschnitt des Verbindungsglieds mit dem Lift verbunden ist, wobei das Verbindungsglied mit einem dem ersten Abschnitt des ersten Verbindungsglieds gegenüberliegenden zweiten Abschnitt des ersten Verbindungsglieds in einem Innenraum des Lifts angeordnet ist, und das erste Verbindungsglied sich in Verriegelungsstellung durch den Zugangsabschnitt des Lifts hindurch erstreckt.

Gemäß einer weiteren bevorzugten Ausführungsform weist der Zugangsabschnitt des Lifts ein Detektionsmittel zur Erfassung einer Anwesenheit von Objekten in dem Zugangsabschnitt auf, vorzugsweise eine Lichtschranke, und weist weiterhin eine Steuerung auf, die zur Verhinderung einer Fahrt des Lifts ausgebildet ist, wenn das Detektionsmittel eine Anwesenheit von Objekten in dem Zugangsabschnitt des Lifts erfasst. Es sind zwei Möglichkeiten zur Verhinderung einer Fahrt des Lifts bei Verriegelungsstellung des ersten Verriegelungselements als besonders bevorzugt anzusehen. Einerseits wird der Lift schier auf Grund der mechanischen Verbindung an einem Fahren gehindert, und andererseits sieht eine Steuerung vor, dass der Lift nur dann zum Fahren im Stande ist, wenn die Tür des Lifts verschlossen ist. Das Schließen der Tür wird entweder mechanisch in Folge des Erstreckens des ersten Verbindungsglieds durch den Zugangsabschnitt des Lifts hindurch verhindert, und andererseits durch Erfassen einer Blockierung des Zugangsabschnitts durch das erste Verbindungsglied mittels des Detektionsmittels.

In einer bevorzugten Ausführungsform weist der Zugangsabschnitt des Lifts eine Tür auf, und das erste Verbindungsglied erstreckt sich in Verriegelungsstellung des ersten Verriegelungselements an der Tür vorbei, wobei die Länge des ersten Verbindungsglieds bemessen ist, in Verriegelungsstellung des ersten Verriegelungselements ein Schließen der Tür zu verhindern, und wobei der Lift eine Steuerung aufweist, die eine Fahrt des Lifts nur bei geschlossener Tür vorsieht.

Die Erfindung löst die ihr zu Grunde liegende Aufgabe weiterhin durch Angabe einer Windenergieanlage mit einer Bodenebene, mindestens einer Arbeitsbühne, einem Lift zum Befahren der Bodenebene und der mindestens einen Arbeitsbühne, einem auf der Arbeitsbühne angeordneten Geländer mit einem Übergangsbereich zu einem Lift, einem Absperrelement zur Absperrung des Übergangsbereichs zu dem Lift und einem zweiten Verriegelungselement, das mit dem Absperrelement verbunden ist, wobei die Arbeitsbühne gemäß einer bevorzugten Ausführungsform der vorliegenden Erfindung ausgebildet ist.

Vorzugsweise ist bei der erfindungsgemäßen Windenergieanlage der Lift gemäß einer bevorzugten Ausführungsform der vorliegenden Erfindung ausgebildet.

Die vorliegende Erfindung betrifft weiterhin die Verwendung einer Verriegelungsvorrichtung nach Art eines Pfandschließsystems zur Absperrung eines Geländers auf einer Arbeitsbühne einer Windenergieanlage mittels eines Absperrelements, wobei das Absperrelement vorzugsweise in einem Übergangsbereich zu einem Lift angeordnet ist.

Nachfolgend wird die vorliegende Erfindung anhand bevorzugter Ausführungsformen und unter Bezugnahme auf die angefügten Zeichnungen näher erläutert. Hierbei zeigt:
- Fig. 1: eine schematische Darstellung eines Übergangsbereichs einer Windenergieanlagen-Arbeitsbühne gemäß der vorliegenden Erfindung;
- Fig. 2: eine schematische Seitenansicht von oben der in Figur 1 gezeigten Ausführungsform;
- Fig. 3: eine Querschnittsansicht eines erfindungsgemäßen Lifts und einer erfindungsgemäßen Arbeitsbühne von der Seite;
- Fig. 4: eine Seitenansicht der Anordnung aus Figur 3 von oben in einem ersten Betriebszustand;
- Fig. 5: die Anordnung aus Figur 4 in einem alternativen Betriebszustand;
- Fig. 6: eine schematische Darstellung einer erfindungsgemäßen Windenergieanlage.

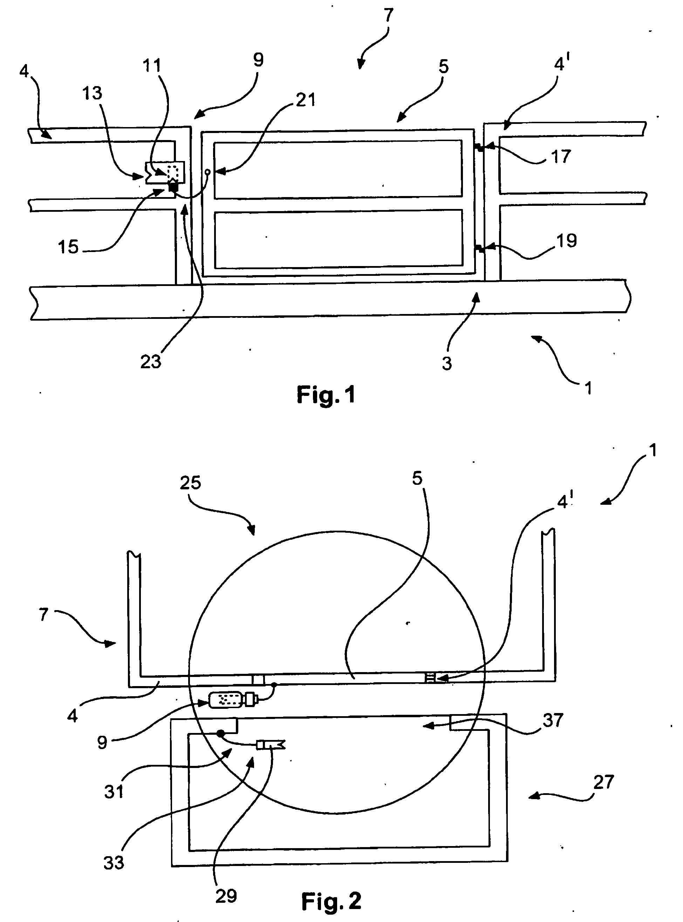

In Figur 1 ist ein Übergangsbereich zwischen einem Lift und einer Arbeitsbühne 1 gemäß der vorliegenden Erfindung aus der Richtung des Lifts blickend dargestellt. Die Windenergieanlage-Arbeitsbühne 1 weist eine Arbeitsplattform 3 und ein Geländer 7 auf. Das Geländer 7 ist mittels eines Absperrelements verriegelbar. Das Absperrelement 5 ist mit einem ersten Scharnier 17 und einem zweiten Scharnier 19 schwenkbar an einem ersten Abschnitt 4' des Geländers 7 befestigt. An einem zweiten Abschnitt 4 des Geländers 7 ist eine Verriegelungsvorrichtung 9 angeordnet. Die Verriegelungsvorrichtung 9 hält in der gezeigten Konfiguration ein zweites Verriegelungselement 15 in einer korrespondierenden Aufnahme. Das zweite Verriegelungselement 15 ist mittels eines zweiten Verbindungsgliedes 23 an einem dem zweiten Verriegelungselement gegenüberliegenden Abschnitt 21 an dem Absperrelement 5 befestigt. Das zweite Verbindungsglied 23 ist vorliegend als Kette ausgebildet, und das Absperrelement 5 ist als Tür ausgebildet. Die Verriegelungsvorrichtung 9 weist eine Aufnahme 11 für das zweite Verriegelungselement sowie eine Aufnahme 13 für das erste Verriegelungselement auf.

Zusätzlich zu der Arbeitsbühne 1 ist in Figur 2 schematisch ein Lift 27 von oben dargestellt. Der Lift 27 weist einen Zugangsabschnitt 37 auf, der zwischen einem Innenraum 37 des Lifts 27 und der Arbeitsbühne 1 in einem Übergangsbereich 25 zwischen der Arbeitsbühne 1 und dem Lift 27 angeordnet ist.

Der Lift 27 weist ein erstes Verriegelungselement 29 auf, welches mit der in Figur 1 dargestellten Aufnahme 13 für das erste Verriegelungselement 29 korrespondiert. Das erste Verriegelungselement 29 weist einen ersten Abschnitt 33 auf, an dem ein erstes Verbindungsglied 31 befestigt ist, was vorliegend als Kette ausgebildet ist. Das erste Verbindungsglied 31 ist an einem zweiten Abschnitt 35 Im Innenraum des Lifts 27 mit dem Lift 27 fest verbunden.

Das erste Verriegelungselement 29 ist dazu ausgebildet, mit der Verriegelungsvorrichtung 9 und dem darin aufgenommenen Verriegelungsmechanismus in Eingriff gebracht zu werden. Die Verriegelungsvorrichtung 9 Ist an dem Geländer 7 in dem zweiten Abschnitt 4 des Geländers 7 ortsfest angeordnet. Der in Figur 2 abgebildete Lift 27 ist in der abgebildeten Betriebsstellung frei verfahrbar und nicht mit der Arbeitsbühne 1 verbunden.

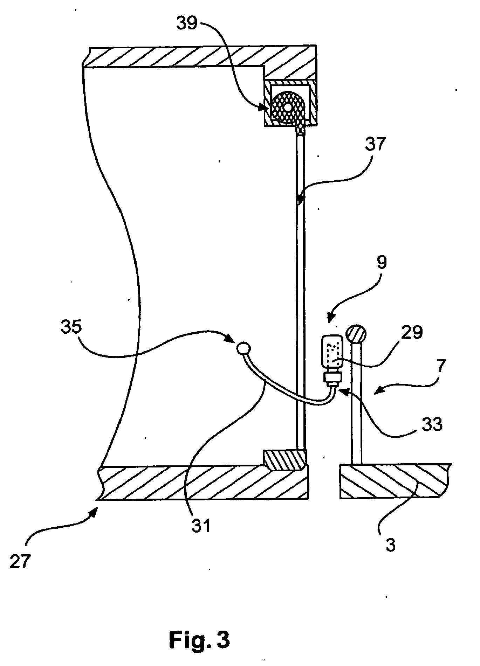

Eine alternative Betriebsstellung ist in Figur 3 dargestellt. Der Lift 27 weist in dem Zugangsabschnitt 37 eine Tür 39 auf. Die Tür 39 ist vorliegend symbolhaft als Rollgitter dargestellt. Besonders bevorzugt ist auch eine Ausgestaltung der Tür als Schiebetür. Die Tür 39 befindet sich in Figur 3 In geöffnetem Zustand. Das erste Verbindungsglied 31, welches in dem zweiten Abschnitt 35 im Inneren des Lifts 27 befestigt ist, erstreckt sich durch den Zugangsabschnitt hindurch, an der geöffneten Tür 39 vorbei. Der erste Abschnitt 33 des Verbindungsglieds ist derart in die Nähe der Verriegelungsvorrichtung 9 geführt, dass das erste Verriegelungselement 29 sich in einer Verriegelungsstellung mit dem Verriegelungsmechanismus innerhalb der Verriegelungsvorrichtung 9 befindet. Der Lift 27 ist in der gezeigten Darstellung fest mit dem Geländer 7 auf der Arbeitsplattform 3 verbunden, und eine Fahrt des Lifts ist nicht möglich.

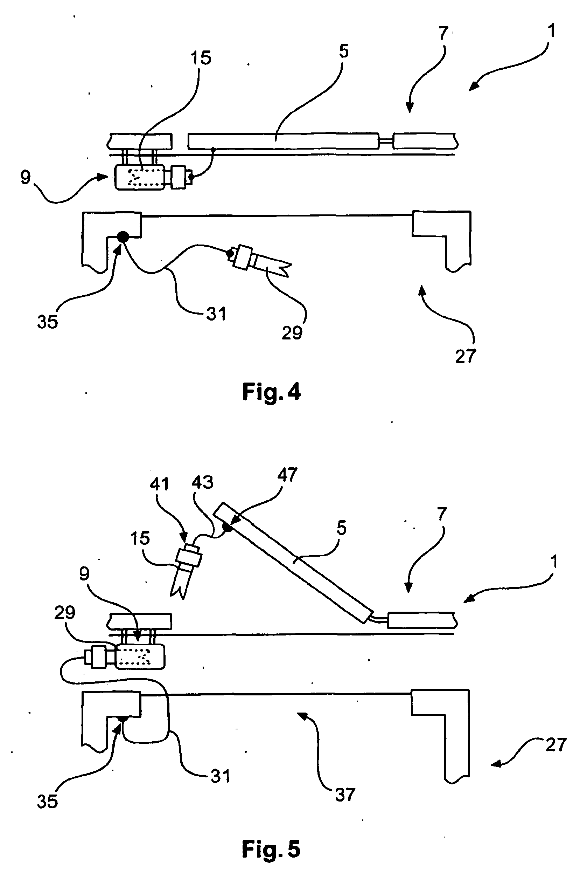

Zwei Detailansichten der alternativen Verriegelungsstellungen des Verriegelungsmechanismus der erfindungsgemäßen Verriegelungsvorrichtung 9 sind in den Figuren 4 und 5 dargestellt. Der in Figur 4 dargestellte Zustand zeigt das zweite Verriegelungselement 15 in Verriegelungsstellung innerhalb der Verriegelungsvorrichtung 9, wodurch das Absperrelement 5 in geschlossener Position relativ zu dem Geländer 7 verriegelt ist. Die Arbeitsbühne 1 kann in der in Figur 4 gezeigten Stellung nicht betreten oder verlassen werden. Das erste Verriegelungselement 29 befindet sich in einer Freigabestellung, ist aber mittels des ersten Verbindungsglieds 21 an dem zweiten Abschnitt 35 innerhalb des Lifts 27 befestigt.

In Figur 5 befindet sich hingegen das erste Verriegelungselement 29 in einer Verriegelungsstellung mit dem innerhalb der Verriegelungsvorrichtung 9 angeordneten Vorriegelungsmechanismus. Das erste Verbindungsglied 31, welches vorliegend als Kette ausgebildet ist, ist im Wesentlichen maximal ausgelenkt und erstrockt sich durch den Zugangsabschnitt 37 hindurch aus dem Inneren des Lifts 27 heraus. Das erste Verbindungsglied 31 ist nach wie vor an dem zweiten Abschnitt 35 innerhalb des Lifts 27 befestigt. Im Gegensatz zu dem ersten Verriegelungselement 29 befindet sich das zweite Verriegelungselement 15 in einer Freigabestellung. Das zweite Verriegelungselement 15 ist an einem ersten Abschnitt 41 eines zweiten Verbindungsglieds 43 befestigt. Das zweite Verbindungsglied 43, welches vorliegend als Kette ausgebildet ist, ist seinerseits in einem zweiten Abschnitt 47 des Verbindungsglieds an dem als Tür ausgebildeten Absperrelement 5 befestigt. Das Absperrelement 5 ist aus einer geschlossenen Position in eine geöffnete Position heraus geschwenkt und zu dem Geländer 7 abgewinkelt. In der in Figur 5 dargestellten Position ist ein Verlassen und Betreten des Lifts 27 bzw. der Arbeitsbühne 1 ermöglicht, während eine Fahrt des Lifts 27 nicht möglich ist.

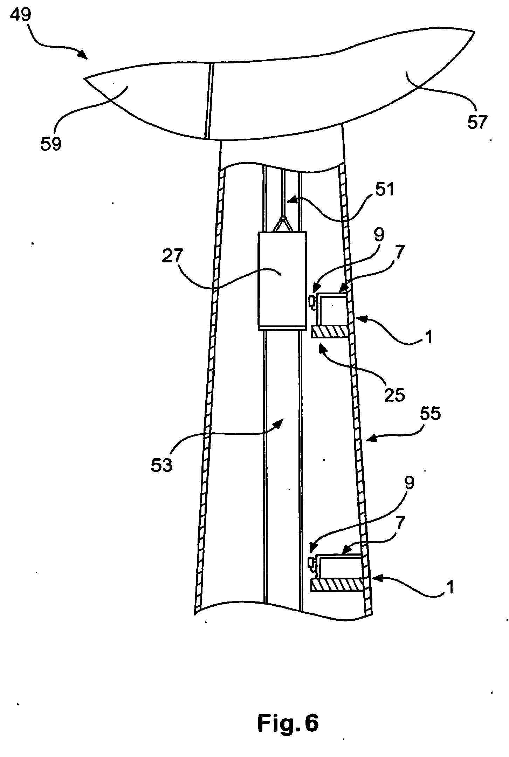

In Figur 6 ist ein Ausbruch einer erfindungsgemäßen Windenergieanlage 49 schematisch dargestellt. Die Windenergieanlage 49 weist in ihrem Inneren einen erfindungsgemäßen Lift 27 auf, welcher an einer Zugeinrichtung 51 aufgehängt und von einer Führeinrichtung 53 geführt Ist. Zusätzlich zu dem Lift 27 sind innerhalb eines Turms 55 der Windenergieanlage 49 eine Mehrzahl von Arbeitsbühnen angeordnet, von denen zwei Arbeitsbühnen 1 dargestellt sind. Die Arbeitsbühnen 1 weisen jeweils ein Geländer 7 auf, an welchem ortsfest eine Verriegelungsvorrichtung 9 angebracht ist. In Figur 6 ist dargestellt, dass der Lift 27 sich derart in der Nähe einer der Arbeitsbühnen 1 befindet, dass ein Durchgang in dem Übergangsbereich 25 zwischen dem Lift 27 und der Arbeitsbühne 1 möglich ist.

In Figur 6 ist nicht dargestellt, dass der Lift nach oben bis in die mit dem Rotor 59 ausgebildete Kanzel 57 verfahren werden kann. Es wird allerdings festgestellt, dass dies eine weitere alternative Möglichkeit im Rahmen der vorliegenden Erfindung darstellt. Auch die Kanzel kann an einem Geländer oder einer ähnlichen Einrichtung eine erfindungsgemäße Verriegelungsvorrichtung vorsehen.

## Patentansprüche

1. Windenergieanlagen-Arbeitsbühne (1), mit einer Tragstruktur, einer Arbeitsplattform (3) und einem auf der Arbeitsplattform (3) angeordneten Geländer (7),
wobei das Geländer (7) mittels eines Absperrelements (5) absperrbar ist, und das Absperrelement (5) in einem Übergangsbereich (25) zu einem Lift (27) angeordnet ist, **gekennzeichnet durch** eine Verriegelungsvorrichtung (9) mit einem Verriegelungsmechanismus zur Aufnahme eines ersten Verriegelungselements (29) und eines zweiten Verriegelungselements (15),
wobei der Verriegelungsmechanismus nach Art eines Pfandschließsystems ausgebildet ist, wobei
- das erste Verriegelungselement (29) mit dem Lift (27) verbunden ist und
- das zweite Verriegelungselement (15) mit dem Absperrelement (5) verbunden ist, und
- der Verriegelungsmechanismus zur Freigabe eines der beiden Verriegelungselemente (15, 29) mittels der Verriegelung des jeweils anderen Verriegelungselements (29, 15) relativ zu der Verriegelungsvorrichtung (9) ausgebildet ist.

2. Arbeitsbühne (1) nach Anspruch 1,
**dadurch gekennzeichnet, dass** der Verriegelungsmechanismus zur Aufnahme des ersten Verriegelungselements (29) in Form einer Münze, eines profilierten und/oder konturierten Flachkörpers, Stabes, oder eines Hohlkörpers eingerichtet ist.

3. Arbeitsbühne (1) nach Anspruch 1 oder 2,
**dadurch gekennzeichnet, dass** das zweite Verriegelungselement (15) als eine Münze, ein profilierter und/oder konturierter Flachkörper, Stab, oder ein Hohlkörper ausgebildet ist.

4. Arbeitsbühne (1) nach einem der vorstehenden Ansprüche,
**dadurch gekennzeichnet, dass** der Verriegelungsmechanismus ortsfest an der Arbeitsbühne (1), vorzugsweise an dem Geländer (7), angeordnet ist.

5. Arbeitsbühne (1) nach Anspruch 4,
**dadurch gekennzeichnet, dass**
- das Absperrelement (5) in einem ersten Abschnitt (4') des Übergangsbereichs (25) zu dem Lift schwenkbar mit dem Geländer (7) verbunden ist, und
- der Verriegelungsmechanismus in einem dem ersten Abschnitt (4') gegenüberliegenden zweiten Abschnitt (4) des Übergangsbereichs (25) zu dem Lift angeordnet ist.

6. Arbeitsbühne (1) nach einem vorstehenden Ansprüche,
**dadurch gekennzeichnet, dass** das Absperrelement (5) eine Stange, eine Kette oder eine Tür ist.

7. Windenergieanlage (49) mit
- einer Bodenebene,
- mindestens einer Arbeitsbühne (1),
- einem Lift (27) zum Befahren der Bodenebene und der mindestens einen Arbeitsbühne (1),
- einem auf der Arbeitsbühne (1) angeordneten Geländer (7) mit einem Übergangsbereich zu dem Lift (27),
- einem Absperrelement (5) zur Absperrung des Übergangsbereichs (25) zu dem Lift (27), und
- einem zweiten Verriegelungselement (15), das mit dem Absperrelement (5) verbunden ist,
- **dadurch gekennzeichnet, dass** die Arbeitsbühne nach einem der Ansprüche 1 bis 6 ausgebildet ist.

8. Windenergieanlage (49) nach Anspruch 7,
**dadurch gekennzeichnet, dass** der Lift (27) zum Befahren einer Bodenebene und der mindestens einen Arbeitsbühne ausgebildet ist, einen Zugangsabschnitt sowie ein mit dem Lift verbundenes erstes Verriegelungselement aufweist.

9. Windenergieanlage (49) nach Anspruch 8,
**dadurch gekennzeichnet, dass** das erste Verriegelungselement (29) in einem ersten Abschnitt (33) mittels eines ersten Verbindungsglieds (31), vorzugsweise einer Kette, eines Drahts, Drahtgeflechts oder Seils, des Verbindungsglieds mit dem Lift (27) verbunden ist, wobei
das erste Verbindungsglied (31) mit einem dem ersten Abschnitt (33) des ersten Verbindungsglieds (31) gegenüberliegenden zweiten Abschnitt (35) des ersten Verbindungsglieds (31) in einem Innenraum des Lifts (27) angeordnet ist, und
das erste Verbindungsglied (31) sich in Verriegelungsstellung durch den Zugangsabschnitt (37) des Lifts (27) hindurch erstreckt.

10. Windenergieanlage (49) nach Anspruch 9,
**dadurch gekennzeichnet, dass** der Zugangsabschnitt (37) des Lifts ein Detektionsmittel zur Erfassung einer Anwesenheit von Objekten in dem Zugangsabschnitt (37), vorzugsweise eine Lichtschranke, aufweist, und
der Lift (27) eine Steuerung aufweist, die zur Verhinderung einer Fahrt des Lifts (27) ausgebildet ist, wenn das Detektionsmittel eine Anwesenheit von Objekten in dem Zugangsabschnitt des Lifts (27) erfasst.

11. Windenergieanlage (49) nach Anspruch 9 oder 10,
**dadurch gekennzeichnet, dass** der Zugangsabschnitt (37) des Lifts (27) eine Tür (39) aufweist,
das erste Verbindungsglied (31) sich in Verriegelungsstellung des ersten Verriegelungselements (29) an der Tür (39) vorbei erstreckt,
die Länge des ersten Verbindungsglieds (31) bemessen ist, in Verriegelungsstellung des ersten Verriegelungselements (29) ein Schließen der Tür (39) zu verhindern, und
der Lift (27) eine Steuerung aufweist, die eine Fahrt des Lifts (27) nur bei geschlossener Tür (39) vorsieht.

12. Verwendung eines Pfandschließsystems zur Absperrung eines Geländers (7) auf einer Windenergieanlagen-Arbeitsbühne (1), wobei die Windenergieanlagen-Arbeitsbühne nach Anspruch 1 ausgebildet ist.

## Claims

1. Wind turbine work scaffold (1) having a carrier structure, a working platform (3) and a rail (7) which is arranged on the working platform (3),
wherein the rail (7) can be blocked by means of a blocking element (5), and the blocking element (5) is arranged in a transition region (25) to a lift (27), **characterised by** a locking device (9) having a locking mechanism for receiving a first locking element (29) and a second locking element (15), wherein the locking mechanism is constructed in the manner of a deposit locking system, wherein
- the first locking element (29) is connected to the lift (27), and
- the second locking element (15) is connected to the blocking element (5), and
- the locking mechanism is constructed for release of one of the two locking elements (15, 29) by means of the locking of the other locking element (29, 15) in each case relative to the locking device (9).

2. Work scaffold (1) according to claim 1,
**characterised in that** the locking mechanism is configured to receive the first locking element (29) in the form of a coin, a profiled and/or contoured flat member, rod or a hollow member.

3. Work scaffold (1) according to claim 1 or 2,
**characterised in that** the second locking element (15) is constructed in the form of a coin, a profiled and/or contoured flat member, rod or a hollow member.

4. Work scaffold (1) according to any one of the preceding claims,
**characterised in that** the locking mechanism is arranged in a fixed manner on the work scaffold (1), preferably on the rail (7).

5. Work scaffold (1) according to claim 4,
**characterised in that**
- the blocking element (5) is pivotably connected to the rail (7) in a first portion (4') of the transition region (25) to the lift, and
- the locking mechanism is arranged in a second portion (4) of the transition region (25) to the lift opposite the first portion (4').

6. Work scaffold (1) according to any one of the preceding claims,
**characterised in that** the blocking element (5) is a rod, a chain or a door.

7. Wind turbine (49) having
- a ground level,
- at least one work scaffold (1),
- a lift (27) for travelling on the ground level and the at least one work scaffold (1),
- a rail (7) which is arranged on the work scaffold (1) and which has a transition region to the lift (27),
- a blocking element (5) for blocking the transition region (25) to the lift (27), and
- a second locking element (15) which is connected to the blocking element (6),
- **characterised in that** the work scaffold is constructed according to any one of claims 1 to 6.

8. Wind turbine (49) according to claim 7,
**characterised in that** the lift (27) is constructed for travelling on a ground level and the at least one work scaffold, has an access portion and a first locking element which is connected to the lift.

9. Wind turbine (49) according to claim 8,
**characterised in that** the first locking element (29) is connected to the lift (27) in a first portion (33) by means of a first connection member (31), preferably a chain, a wire, wire mesh or cable, of the connection member, wherein
the first connection member (31) is arranged with a second portion (35) of the first connection member (31) opposite the first portion (33) of the first connection member (31) in an inner space of the lift (27), and
the first connection member (31) extends in the locking position through the access portion (37) of the lift (27).

10. Wind turbine (49) according to claim 9,
**characterised in that** the access portion (37) of the lift has a detection means for detecting a presence of objects in the access portion (37), preferably a photoelectric barrier, and the lift (27) has a control system which is constructed to prevent travel of the lift (27) when the detection means detects a presence of objects in the access portion of the lift (27).

11. Wind turbine (49) according to claim 9 or claim 10,
**characterised in that** the access portion (37) of the lift (27) has a door (39),
the first connection member (31) extends in the locking position of the first locking element (29) past the door (39), the length of the first connection member (31) is sized to prevent a closure of the door (39) in the locking position of the first locking element (29), and
the lift (27) has a control system which makes provision for travel of the lift (27) only when the door (39) is closed.

12. Use of a deposit closure system for blocking a rail (7) on a wind turbine work scaffold (1), wherein the wind turbine work scaffold is constructed according to claim 1.

## Revendications

1. Plate-forme de travail d'éolienne (1) avec une structure porteuse, une plateforme de travail (3) et une balustrade (7) disposée sur la plateforme de travail (3),
la balustrade (7) pouvant être bloquée à l'aide d'un élément de blocage (5) et l'élément de blocage (5) étant disposé dans une zone de transition (25) à un ascenseur (27), **caractérisée par** un dispositif de verrouillage (9) avec un mécanisme de verrouillage pour la réception d'un premier élément de verrouillage (29) et d'un second élément de verrouillage (15),
le mécanisme de verrouillage étant réalisé comme un système de fermeture de consigne,
- le premier élément de verrouillage (29) étant relié à l'ascenseur (27) et
- le second élément de verrouillage (15) étant relié à l'élément de blocage (5) et
- le mécanisme de verrouillage étant réalisé pour la libération d'un des deux éléments de verrouillage (15, 29) à l'aide du verrouillage de l'autre élément de verrouillage respectif (29, 15) par rapport au dispositif de verrouillage (9).

2. Plateforme de travail (1) selon la revendication 1,
**caractérisée en ce que** le mécanisme de verrouillage est aménagé pour la réception du premier élément de verrouillage (29) sous la forme d'un jeton, d'un corps plat profilé et/ou à contour, d'une barre ou d'un corps creux.

3. Plateforme de travail (1) selon la revendication 1 ou 2,
**caractérisée en ce que** le second élément de verrouillage (15) est réalisé sous la forme d'un jeton, d'un corps plat profilé et/ou à contour, d'une barre ou d'un corps creux.

4. Plateforme de travail (1) selon l'une quelconque des revendications précédentes,
**caractérisée en ce que** le mécanisme de verrouillage est disposé fixement sur la plateforme de travail (1), de préférence sur la balustrade (7).

5. Plateforme de travail (1) selon la revendication 4,
**caractérisée en ce que**
- l'élément de blocage (5) est relié à la balustrade (7) de manière à pouvoir pivoter dans une première section (4') de la zone de transition (25) à l'ascenseur, et
- le mécanisme de verrouillage est disposé dans une seconde section (4) opposée à la première section (4') de la zone de transition (25) à l'ascenseur.

6. Plateforme de travail (1) selon l'une quelconque des revendications précédentes,
**caractérisée en ce que** l'élément de blocage (5) est une tige, une chaîne ou une porte.

7. Eolienne (49) avec
- un plan de sol,
- au moins une plateforme de travail (1),
- un ascenseur (27) pour visiter le plan de sol et l'au moins une plateforme de travail (1),
- une balustrade (7) disposée sur la plateforme de travail (1) avec une zone de transition à l'ascenseur (27),
- un élément de blocage (5) pour le blocage de la zone de transition (25) à l'ascenseur (27) et
- un second élément de verrouillage (15) qui est relié à l'élément de blocage (5),
- **caractérisée en ce que** la plateforme de travail est réalisée selon l'une quelconque des revendications 1 à 6.

8. Eolienne (49) selon la revendication 7,
**caractérisée en ce que** l'ascenseur (27) est réalisé pour la visite d'un plan de sol et de l'au moins une plateforme de travail, présente une section d'accès ainsi qu'un premier élément de verrouillage relié à l'ascenseur.

9. Eolienne (49) selon la revendication 8,
**caractérisée en ce que** le premier élément de verrouillage (29) est relié à l'ascenseur (27) dans une première section (33) à l'aide d'un premier organe de liaison (31), de préférence une chaîne, un fil d'acier, un treillis en fil métallique ou un câble de l'organe de liaison,
le premier organe de liaison (31) étant disposé avec une seconde section (35) du premier organe de liaison (31) opposée à la première section (33) du premier organe de liaison (31) dans un espace intérieur de l'ascenseur (27) et
le premier organe de liaison (31) s'étend en position de verrouillage au travers de la section d'accès (37) de l'ascenseur (27).

10. Eolienne (49) selon la revendication 9,
**caractérisée en ce que** la section d'accès (37) de l'ascenseur présente un moyen de détection pour la détection d'une présence d'objets dans la section d'accès (37), de préférence une barrière lumineuse et
l'ascenseur (27) présente une commande qui est réalisée pour l'empêchement d'un trajet de l'ascenseur (27) lorsque le moyen de détection détecte une présence d'objets dans la section d'accès de l'ascenseur (27).

11. Eolienne (49) selon la revendication 9 ou 10,
**caractérisée en ce que** la section d'accès (37) de l'ascenseur (27) présente une porte (39),
le premier organe de liaison (31) s'étend en position de verrouillage du premier élément de verrouillage (29) devant la porte (39),
la longueur du premier organe de liaison (31) est dimensionnée afin d'empêcher, en position de verrouillage du premier élément de verrouillage (29), une fermeture de la porte (39), et
l'ascenseur (27) présente une commande qui prévoit un trajet de l'ascenseur (27) seulement en cas de porte fermée (39).

12. Utilisation d'un système de fermeture de consigne pour le blocage d'une balustrade (7) sur une plateforme de travail d'éolienne (1), la plateforme de travail d'éolienne étant réalisée selon la revendication 1.
